# EUROPEAN PATENT APPLICATION

(11) **EP 4 787 664 A1**
(43) Date of publication of application: **05.08.2026**
(21) Application number: 23953312.8
(22) Date of filing: 25.09.2023
(51) Int. Cl.: H02J 7/02, B60L 53/14

(54) **DIRECT CURRENT CHARGING MODULE AND DIRECT CURRENT CHARGING PILE**

(71) Applicant: Shinry Technologies Co., Ltd., Shenzhen, Guangdong 518055 (CN)
(72) Inventor: CHEN, Qihao, Shenzhen, Guangdong 518055 (CN); SONG, Anguo, Shenzhen, Guangdong 518055 (CN); FENG, Lixin, Shenzhen, Guangdong 518055 (CN); WANG, Xizhe, Shenzhen, Guangdong 518055 (CN); WU, Renhua, Shenzhen, Guangdong 518055 (CN)
(74) Representative: Winter, Brandl - Partnerschaft mbB
(86) International application number: PCT/CN2023/121093
(87) International publication number: WO 2025/065146

(57) **Abstract**

A direct current (DC) charging module and a DC charging pile are provided. The DC charging module includes an alternating current (AC)/DC converter, a DC/DC converter, an internal controller, a first internal power supply, a second internal power supply, and a wake-up module. An input end of the AC/DC converter is configured to be connected to an AC power source, an output end of the AC/DC converter is connected to an input end of the DC/DC converter and a power supply end of the first internal power supply. The internal controller is configured to send a shutdown signal to the first internal power supply to turn off the first internal power supply when receiving a sleep command from the wake-up module; when the first internal power supply is turned off, the internal controller, the AC/DC converter, and the DC/DC converter are all in a sleep state. The second internal power supply is configured to supply power to the wake-up module when the first internal power supply is turned off. In embodiments of the disclosure, the standby power consumption of the DC charging module can be reduced.

## Description

### TECHNICAL FIELD

This disclosure relates to the field of electronic circuit technology, in particular to a direct current (DC) charging module and a DC charging pile.

### BACKGROUND

With the rapid development of new energy vehicles, a charging infrastructure has been massively invested. Currently, the number of public direct current (DC) charging piles in China has exceeded 700,000 units. Assuming each charging pile is equipped with five DC charging modules, an installed base of DC charging modules has exceeded 3.5 million. Currently, based on a standby loss of 15W per DC charging module, the total power consumption of DC charging modules in a standby mode per day (with standby time calculated as 12 hours per day) exceeds 630,000 kWh. Therefore, reducing the standby power consumption of DC charging modules has become a problem to be solved.

### SUMMARY

Embodiments of the disclosure provide a direct current (DC) charging module and a DC charging pile, which can reduce standby power consumption of the DC charging module.

In a first aspect of embodiments of the disclosure, a DC charging module is provided. The DC charging module includes an alternating current (AC)/DC converter, a DC/DC converter, an internal controller, a first internal power supply, a second internal power supply, and a wake-up module. An input end of the AC/DC converter is configured to be connected to an AC power source, an output end of the AC/DC converter is connected to an input end of the DC/DC converter and a power supply end of the first internal power supply. The internal controller is configured to send a shutdown signal to the first internal power supply to turn off the first internal power supply when receiving a sleep command from the wake-up module. When the first internal power supply is turned off, the internal controller, the AC/DC converter, and the DC/DC converter are all in a sleep state. The second internal power supply is configured to supply power to the wake-up module when the first internal power supply is turned off.

Optionally, the wake-up module is configured to send an enable signal to the first internal power supply to turn on the first internal power supply when receiving a wake-up command; the first internal power supply is configured to supply power to the internal controller, the AC/DC converter, the DC/DC converter, and the wake-up module when the first internal power supply is turned on; and the second internal power supply is configured to stop supplying power to the wake-up module when the first internal power supply is turned on.

Optionally, the AC power source includes a three-phase AC power source, and a power supply end of the second internal power supply is configured to be connected to one phase of the three-phase AC power source.

Optionally, the DC charging module further includes a first capacitor, a second capacitor, and a third capacitor. A positive electrode of the power supply end of the second internal power supply is configured to be connected to one phase of the three-phase AC power source. A first end of the first capacitor is configured to be connected to a first phase of the three-phase AC power source, a first end of the second capacitor is configured to be connected to a second phase of the three-phase AC power source, and a first end of the third capacitor is configured to be connected to a third phase of the three-phase AC power source. A second end of the first capacitor, a second end of the second capacitor, and a third end of the third capacitor are connected to a negative electrode of the power supply end of the second internal power supply.

Optionally, a capacitance value of the first capacitor, a capacitance value of the second capacitor, and a capacitance value of the third capacitor are equal.

Optionally, the AC/DC converter includes a first inductor, a second inductor, a third inductor, a bus capacitor, a first switching transistor, a second switching transistor, a third switching transistor, a fourth switching transistor, a fifth switching transistor, a sixth switching transistor, a first body diode, a second body diode, a third body diode, a fourth body diode, a fifth body diode and a sixth body diode. A first end of the first inductor is configured to be connected to the first phase of the three-phase AC power source, a first end of the second inductor is configured to be connected to the second phase of the three-phase AC power source, and a first end of the third inductor is configured to be connected to the third phase of the three-phase AC power source. A second end of the first inductor is connected to a first end of the first switching transistor, an anode of the first body diode, a first end of the fourth switching transistor and a cathode of the fourth body diode. A second end of the second inductor is connected to a first end of the second switching transistor, an anode of the second body diode, a first end of the fifth switching transistor and a cathode of the fifth body diode. A second end of the third inductor is connected to a first end of the third switching transistor, an anode of the third body diode, a first end of the sixth switching transistor and a cathode of the sixth body diode. A second end of the first switching transistor, a second end of the second switching transistor, a second end of the third switching transistor, a cathode of the first body diode, a cathode of the second body diode, a cathode of the third body diode are connected to a positive terminal of the bus capacitor. A second end of the fourth switching transistor, a second end of the fifth switching transistor, a second end of the sixth switching transistor, an anode of the fourth body diode, an anode of the fifth body diode, an anode of the sixth body diode are connected to a negative terminal of the bus capacitor. A positive electrode of the power supply end of the first internal power supply is connected to the positive terminal of the bus capacitor, and a negative electrode of the power supply end of the first internal power supply is connected to the negative terminal of the bus capacitor.

Optionally, the power supply end of the second internal power supply is connected to the output end of the AC/DC converter.

Optionally, the DC charging module further includes a first diode, a power supply end of the wake-up module is connected to an output end of the first internal power supply and a cathode of the first diode, and an anode of the first diode is connected to an output end of the second internal power supply. When the first internal power supply is enabled, a voltage of the output end of the first internal power supply is greater than a voltage output from the second internal power supply.

Optionally, the internal controller is further configured to turn off the second internal power supply when the first internal power supply is turned on.

Optionally, in terms of sending the shutdown signal to the first internal power supply to turn off the first internal power supply when receiving the sleep command from the wake-up module, the internal controller is configured to: send the enable signal to the second internal power supply to turn on the second internal power supply when receiving the sleep command from the wake-up module; and send the shutdown signal to the first internal power supply to turn off the first internal power supply after sending the enable signal to the second internal power supply.

Optionally, the wake-up module includes a controller area network (CAN) communication controller.

In a second aspect of embodiments of the disclosure, a DC charging pile is provided. The DC charging pile includes the DC charging module according to any one of the first aspect and the AC power source.

According to the DC charging module of the embodiments of the disclosure, when receiving the sleep command sent by the wake-up module, the internal controller sends the shutdown signal to the first internal power supply to turn off the first internal power supply. When the first internal power supply is turned off, the internal controller, the AC/DC converter, and the DC/DC converter are all in the sleep state. When the first internal power supply is turned off, the second internal power supply supplies power to the wake-up module. In the embodiments of the disclosure, when receiving the sleep command sent by the wake-up module, the first internal power supply is turned off and the internal controller, the AC/DC converter, and the DC/DC converter are all placed in the sleep state, thereby reducing the standby power consumption of the DC charging module.

### BRIEF DESCRIPTION OF THE DRAWINGS

To more clearly illustrate technical solutions in embodiments of the disclosure or in the prior art, drawings that need to be used in a description of the embodiments or the prior art will be briefly introduced below. Obviously, the drawings in the following description are merely some embodiments of the disclosure. For those skilled in the art, other drawings can also be obtained based on these drawings without creative work.
FIG. 1 is a schematic structural diagram of a direct current (DC) charging module provided in embodiments of the disclosure.
FIG. 2 is another schematic structural diagram of a DC charging module provided in embodiments of the disclosure.
FIG. 3 is another schematic structural diagram of a DC charging module provided in embodiments of the disclosure.
FIG. 4 is a schematic structural diagram of an alternating current (AC)/DC converter provided in embodiments of the disclosure.
FIG. 5 is another schematic structural diagram of a DC charging module provided in embodiments of the disclosure.
FIG. 6 is another schematic structural diagram of a DC charging module provided in embodiments of the disclosure.
FIG. 7 is a schematic structural diagram of a DC charging pile provided in embodiments of the disclosure.

### DETAILED DESCRIPTION

Technical solutions in embodiments of the disclosure will be clearly and completely described below with reference to drawings in the embodiments of the disclosure. Obviously, the described embodiments are only part of the embodiments of the disclosure, not all of the embodiments. Based on the embodiments in the disclosure, all other embodiments obtained by those skilled in the art without making creative work fall within the scope of protection of the disclosure.

The terms "first", "second", etc. in the specification and claims of the disclosure and the above-mentioned drawings are used to distinguish different objects, rather than to describe a specific order. In addition, the terms "comprising" and "having" and any variations thereof are intended to cover a non-exclusive inclusion. For example, a process, a system, a product or a device that includes a series of steps or units is not limited to listed steps or units, but may optionally also include unlisted steps or units, or may optionally also include other steps or units inherent to these processes, products or devices.

An "embodiment" referred in the disclosure means that specific features, structures, or characteristics described in conjunction with the embodiment may be included in at least one embodiment of the disclosure. An appearance of this phrase in various places in the specification does not necessarily all refer to the same embodiment, nor are they independent or alternative embodiments that are mutually exclusive with other embodiments. Those skilled in the art explicitly and implicitly understand that the embodiments described in the disclosure may be combined with other embodiments.

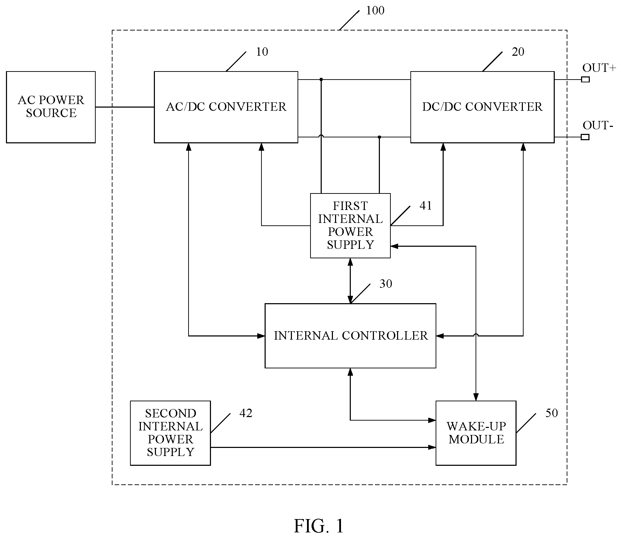

Referring to FIG. 1, FIG. 1 is a schematic structural diagram of a DC charging module provided in embodiments of the disclosure. As shown in FIG. 1, the DC charging module 100 may include an alternating current/direct current (AC/DC) converter 10, a DC/DC converter 20, an internal controller 30, a first internal power supply 41, a second internal power supply 42 and a wake-up module 50. An input end of the AC/DC converter 10 is configured to be connected to an AC power source, an output end of the AC/DC converter 10 is connected to an input end of the DC/DC converter 20 and a power supply end of the first internal power supply 41. The internal controller 30 is configured to send a shutdown signal to the first internal power supply 41 to turn off the first internal power supply 41 when receiving a sleep command from the wake-up module 50. When the first internal power supply 41 is turned off, the internal controller 30, the AC/DC converter 10, and the DC/DC converter 20 are all in a sleep state. The second internal power supply 42 is configured to supply power to the wake-up module 50 when the first internal power supply 41 is turned off.

The alternating current/direct current converter (AC/DC converter) may also be called an AC-DC converter, which is a device that converts an alternating current to a direct current voltage. The AC/DC converter 10 may include switching transistors, a voltage sampling module(s), and a current sampling module(s).

When the AC/DC converter 10 is in the sleep state, the AC/DC converter 10 does not have a power factor correction (PFC) function, and can maintain a low-power DC output. When the first internal power supply 41 powers the AC/DC converter 10, the AC/DC converter 10 can work normally. In a normal working state, the AC/DC converter 10 has the PFC function and is able to deliver a high-power DC output.

The direct current/direct current converter (DC/DC converter) may also be called a DC-DC converter, which is a DC conversion device that converts a basic DC power source to other DC voltages. The DC/DC converter can convert a high voltage to a low voltage, and can also convert a low voltage to a high voltage. The DC/DC converter 20 may include switching transistors, a transformer(s), a voltage sampling module(s), and a current sampling module(s). The DC/DC converter 20 can convert one type of DC power to another type of DC power.

The internal controller 30 can control turn-on or turn-off of switching transistors in the AC/DC converter 10, can obtain voltage sampling results of a voltage sampling module in the AC/DC converter 10 and current sampling results of a current sampling module, and can control turn-on or turn-off of the switching transistors in the AC/DC converter 10 according to the voltage sampling results of the voltage sampling module in the AC/DC converter 10 and the current sampling results of the current sampling module in the AC/DC converter 10.

The internal controller 30 can control turn-on or turn-off of switching transistors in the DC/DC converter 20, can obtain voltage sampling results of a voltage sampling module in the DC/DC converter 20 and current sampling results of a current sampling module, and can control turn-on or turn-off of the switching transistors in the DC/DC converter 20 according to the voltage sampling results of the voltage sampling module in the DC/DC converter 20 and the current sampling results of the current sampling module in the DC/DC converter 20.

The wake-up module 50 can send the sleep command to the internal controller 30 when receiving the sleep command. The wake-up module 50 may receive the sleep command from an external controller, and send the sleep command to the internal controller 30. The external controller may be a controller located outside the DC charging module, for example, a controller of a DC charging pile. The DC charging pile may include multiple DC charging modules, and a controller of the DC charging pile can be used to control whether each DC charging module works. For example, when no charging demand is detected for a DC charging module (for example, when a user unplugs a charging gun from the DC charging pile), the controller of the DC charging pile can send the sleep command to the wake-up module of the DC charging module, to let the DC charging module be in the sleep state.

The wake-up module 50 may be a module capable of sending a control signal (for example, sleep command or wake-up command).

In a possible embodiment, the wake-up module 50 may be a controller area network (CAN) communication controller. The CAN communication controller is an existing module on the DC charging pile, and by utilizing the existing CAN communication controller as the wake-up module, no new module is needed, thereby reducing cost.

In a possible embodiment, the wake-up module 50 may be the controller of the DC charging pile, and the controller of the DC charging pile can directly send the sleep command to the internal controller 30. The controller of the DC charging pile can also directly send the wake-up command to the first internal power supply 41 to turn on the first internal power supply 41.

The wake-up module 50 needs to continuously maintain being powered, and when a charging demand is detected, the wake-up module 50 can timely wake up the DC charging module. When no charging demand is detected, the wake-up module 50 can timely notify the internal controller 30, to make the internal controller 30 turn off the first internal power supply 41 and place the DC charging module be in the sleep state, thereby reducing the standby power consumption of the DC charging module.

The first internal power supply 41 may be a DC-to-DC power module. The first internal power supply 41 can convert a DC voltage output by the AC/DC converter 10 to a voltage for supplying power to various modules.

The first internal power supply 41 can supply power to the switching transistors, the voltage sampling module, the current sampling module, and the like in the AC/DC converter 10. The first internal power supply 41 can supply power to the switching transistors, the transformer, the voltage sampling module, the current sampling module, and the like in the DC/DC converter 20.

When the first internal power supply 41 is turned on, the first internal power supply 41 can supply power to the wake-up module 50. When the first internal power supply 41 is turned off, the second internal power supply 42 can supply power to the wake-up module 50.

When the first internal power supply 41 is turned off, the internal controller 30, the AC/DC converter 10, and the DC/DC converter 20 are all in the sleep state and consume no power.

A working power of the second internal power supply 42 is lower than a working power of the first internal power supply 41. The working power of the second internal power supply 42 is lower than a standby power of the first internal power supply 41. For example, the working power of the first internal power supply 41 is 40 watts (W), the standby power of the first internal power supply 41 is 15W, and the working power of the second internal power supply 42 is 1W.

The power consumption when the first internal power supply 41 is in a standby state is different from the power consumption when the first internal power supply 41 is turned off. In the absence of second internal power supply 42, when the first internal power supply 41 is in the standby state, the first internal power supply 41 needs to supply power to the internal controller 30, driver chips of switching transistors in the AC/DC converter 10, and driver chips of switching transistors in the DC/DC converter 20, so the first internal power supply 41 will still consume power. When the first internal power supply 41 is turned off, the power consumption of the first internal power supply 41 is 0, and the first internal power supply 41 will not consume power.

In embodiments of the disclosure, when receiving the sleep command from the wake-up module, the first internal power supply is turned off and the internal controller, the AC/DC converter, and the DC/DC converter are all placed in the sleep state. When the internal controller, the AC/DC converter, and the DC/DC converter are all in the sleep state, no energy will be consumed, thereby the standby power consumption of the DC charging module can be reduced.

Optionally, the wake-up module 50 is configured to: send an enable signal to the first internal power supply 41 to turn on the first internal power supply 41 when receiving the wake-up command. The first internal power supply 41 is configured to: supply power to the internal controller 30, the AC/DC converter 10, the DC/DC converter 20, and the wake-up module 50 when the first internal power supply 41 is turned on. The second internal power supply 42 may be an AC-to-DC power module or a DC-to-DC power module. When the second internal power supply 42 is the AC-to-DC power module, the second internal power supply 42 can draw power from the AC power source, when the second internal power supply 42 is the DC-to-DC power module, the second internal power supply 42 can draw power from the output end of the AC/DC converter 10.

The second internal power supply 42 is configured to: supply power to the wake-up module 50 when the first internal power supply 41 is turned off, and is further configured to: stop supplying power to the wake-up module 50 when the first internal power supply 41 is turned on.

In embodiments of the disclosure, when a charging demand is detected, the controller of the DC charging pile can send the wake-up command to the wake-up module 50, when the wake-up module 50 receives the wake-up command, the wake-up module 50 can directly send the enable signal to the first internal power supply 41 to turn on the first internal power supply 41. After the first internal power supply 41 is turned on, the first internal power supply 41 can supply power to the internal controller 30, the AC/DC converter 10, the DC/DC converter 20, and the wake-up module 50, to ensure that the DC charging module can work normally.

When the first internal power supply 41 is turned on, the second internal power supply 42 stops supplying power to the wake-up module 50. The second internal power supply 42 stopping supplying power to the wake-up module 50 may be that the second internal power supply 42 is turned off, or may be that a supply voltage output by the first internal power supply 41 to the wake-up module 50 is higher than a supply voltage output by the second internal power supply 42 to the wake-up module 50.

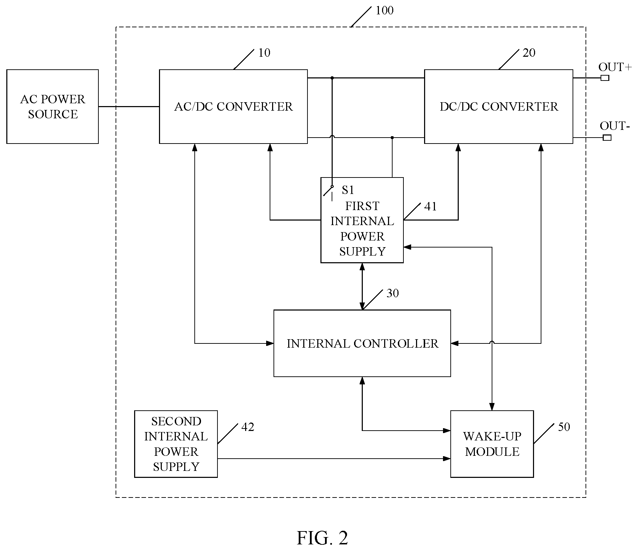

The internal controller 30 sends the shutdown signal to the first internal power supply 41, to disconnect the power supply end of the first internal power supply 41 from the output end of the AC/DC converter 10. Referring to FIG. 2, FIG. 2 is another schematic structural diagram of a DC charging module provided in embodiments of the disclosure. As shown in FIG. 2, a first switch S1 may be provided in the first internal power supply 41, the first switch S1 may be disposed between the power supply end of the first internal power supply 41 and the output end of the AC/DC converter 10 (the first switch S1 may be disposed outside the first internal power supply 41 or inside the first internal power supply 41, and FIG. 2 illustrates the case where the first switch S1 is disposed inside the first internal power supply 41 as an example). When the first switch S1 receives the shutdown signal, the first switch S1 is turned off, so the first internal power supply 41 is turned off. When the first switch S1 receives the enable signal, the first switch S1 is turned on, so the first internal power supply 41 is turned on.

The first switch S1 may be any one of a relay, an insulated gate bipolar transistor (IGBT), a bipolar junction transistor (BJT), and a metal-oxide-semiconductor field-effect transistor (MOSFET), where the MOSFET may be abbreviated as a MOS transistor. When the first switch S1 is an N-type MOS transistor, the enable signal is a high-level signal, and the shutdown signal is a low-level signal.

Optionally, the AC/DC converter 10 is configured to: convert an AC power to a first DC power to supply power to the first internal power supply 41 when the first internal power supply 41 is enabled. The DC/DC converter 20 is configured to: convert, when the first internal power supply 41 is enabled and under control of the internal controller 30, the first DC power to a second DC power for output.

When the first internal power supply 41 is turned on, the first internal power supply 41 is configured to convert the first DC power output by the AC/DC converter 10 to a third DC power, and supply power to the internal controller 30, driver chips of switching transistors of the AC/DC converter 10, the DC/DC converter 20, and the wake-up module 50 through the third DC power. A voltage of the third DC power is different from a voltage of the first DC power.

When the AC/DC converter 10 is in the sleep state, the AC/DC converter 10 has an ability to convert the AC power to a fourth DC power. A voltage of the fourth DC power and the voltage of the first DC power may be different or the same. When the first internal power supply 41 is awakened by the wake-up module 50, the first internal power supply 41 can draw power from the output end of the AC/DC converter 10, convert the fourth DC power to the third DC power, and supply power to the internal controller 30, driver chips of switching transistors of the AC/DC converter 10, the DC/DC converter 20, and the wake-up module 50 through the third DC power.

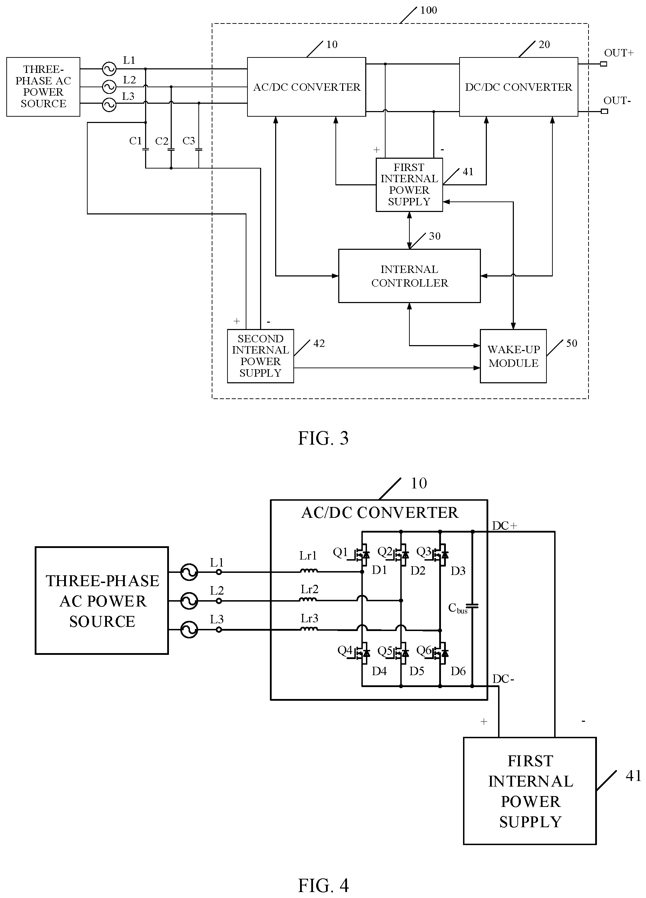

Referring to FIG. 3, FIG. 3 is another schematic structural diagram of a DC charging module provided in embodiments of the disclosure. FIG. 3 is obtained based on FIG. 1, as shown in FIG. 3, the AC power source includes a three-phase AC power source, a power supply end of the second internal power supply 42 is connected to one phase of the three-phase AC power source. Three phases of the three-phase AC power source are a first phase L1, a second phase L2, and a third phase L3 respectively. In FIG. 3, the power supply end of the second internal power supply 42 is connected to the first phase L1 of the three-phase AC power source. FIG. 3 takes the case that the power supply end of the second internal power supply 42 is connected to the first phase L1 of the three-phase AC power source as an example.

L1, L2, and L3 respectively correspond to inputs of the three-phase AC power source, and L1, L2, and L3 are all live wires.

In embodiments of the disclosure, the second internal power supply 42 may be an AC-to-DC power module. The second internal power supply 42 draws power from one phase of the three-phase AC power source, compared with drawing power from all the three phases of the three-phase AC power source, a DC voltage output after AC-to-DC conversion in the second internal power supply 42 is lower, and power components with lower voltage ratings (that is, power components with a relatively low voltage stress) may be adopted inside the second internal power supply 42, which can save cost. The second internal power supply 42 only works when the first internal power supply 41 is turned off, to supply power to the wake-up module 50. When the first internal power supply 41 works, the second internal power supply 42 is not working, and the second internal power supply 42 drawing power from one phase of the three-phase AC power source will also not cause three-phase imbalance of a power grid.

As shown in FIG. 3, the DC charging module further includes a first capacitor C1, a second capacitor C2, and a third capacitor C3. A positive electrode of the power supply end of the second internal power supply 42 is configured to be connected to one phase of the three-phase AC power source. A first end of the first capacitor C1 is configured to be connected to the first phase L1 of the three-phase AC power source, a first end of the second capacitor C2 is configured to be connected to the second phase L2 of the three-phase AC power source, and a first end of the third capacitor C3 is configured to be connected to the third phase L3 of the three-phase AC power source. A second end of the first capacitor C1, a second end of the second capacitor C2, and a third end of the third capacitor C3 are connected to a negative electrode of the power supply end of the second internal power supply 42.

Capacitance values of the first capacitor C1, the second capacitor C2 and the third capacitor C3 are equal.

When the capacitance values of C1, C2 and C3 are equal, a voltage of a node where C1, C2 and C3 are connected in parallel is the same as a voltage of a neutral wire. The second internal power supply 42 obtains a voltage of one phase from L1 and the node where C1, C2 and C3 are connected in parallel.

Referring to FIG. 4, FIG. 4 is a schematic structural diagram of an AC/DC converter provided in embodiments of the disclosure. As shown in FIG. 4, the AC/DC converter 10 includes a first inductor Lr1, a second inductor Lr2, a third inductor Lr3, a bus capacitor Cbus, a first switching transistor Q1, a second switching transistor Q2, a third switching transistor Q3, a fourth switching transistor Q4, a fifth switching transistor Q5, a sixth switching transistor Q6, a first body diode D1, a second body diode D2, a third body diode D3, a fourth body diode D4, a fifth body diode D5 and a sixth body diode D6.

A first end of the first inductor Lr1 is configured to be connected to the first phase L1 of the three-phase AC power source, a first end of the second inductor Lr2 is configured to be connected to the second phase L2 of the three-phase AC power source, and a first end of the third inductor Lr3 is configured to be connected to the third phase L3 of the three-phase AC power source. A second end of the first inductor Lr1 is connected to a first end of the first switching transistor Q1, an anode of the first body diode D1, a first end of the fourth switching transistor Q4 and a cathode of the fourth body diode D4. A second end of the second inductor Lr2 is connected to a first end of the second switching transistor Q2, an anode of the second body diode D2, a first end of the fifth switching transistor Q5 and a cathode of the fifth body diode D5. A second end of the third inductor Lr3 is connected to a first end of the third switching transistor Q3, an anode of the third body diode D3, a first end of the sixth switching transistor Q6 and a cathode of the sixth body diode D6. A second end of the first switching transistor Q1, a second end of the second switching transistor Q2, a second end of the third switching transistor Q3, a cathode of the first body diode D1, a cathode of the second body diode D2, a cathode of the third body diode D3 are connected to a positive terminal of the bus capacitor Cbus. A second end of the fourth switching transistor Q4, a second end of the fifth switching transistor Q5, a second end of the sixth switching transistor Q6, an anode of the fourth body diode D4, an anode of the fifth body diode D5, an anode of the sixth body diode D6 are connected to a negative terminal of the bus capacitor Cbus. A positive electrode of the power supply end of the first internal power supply 41 is connected to the positive terminal of the bus capacitor Cbus, and a negative electrode of the power supply end of the first internal power supply 41 is connected to the negative terminal of the bus capacitor Cbus.

The switching transistors in FIG. 4 may be any one of a relay, an insulated gate bipolar transistor (IGBT), a bipolar junction transistor (BJT), and a metal-oxide-semiconductor field-effect transistor (MOSFET), and the MOSFET may be abbreviated as a MOS transistor. In FIG. 4, the switching transistors is taken as an N-type MOS transistor (that is, NMOS transistor) as an example, and a first end and a second end of the switching transistor may be a source and a drain of the NMOS transistor.

The first body diode D1, the second body diode D2, the third body diode D3, the fourth body diode D4, the fifth body diode D5 and the sixth body diode D6 are body diodes of the first switching transistor Q1, the second switching transistor Q2, the third switching transistor Q3, the fourth switching transistor Q4, the fifth switching transistor Q5 and the sixth switching transistor Q6, respectively.

In FIG. 4, a third end of each switching transistor (for example, a gate of the MOS transistor) may be connected to a driver chip corresponding to the switching transistor, and the driver chip is powered by the first internal power supply 41. When the first internal power supply 41 is turned off, all driver chips of the switching transistors in FIG. 4 lose power. In this case, the first inductor Lr1, the second inductor Lr2, the third inductor Lr3, the first body diode D1, the second body diode D2, the third body diode D3, the fourth body diode D4, the fifth body diode D5, and the sixth body diode D6 of the AC/DC converter 10 form a three-phase rectifier bridge, which still retains a rectification function and can convert a three-phase AC power of the three-phase AC power source to a DC power for output. After the wake-up module 50 sends the enable signal to the first internal power supply 41, the first internal power supply 41 can draw power from the output end of the AC/DC converter 10, so that the first internal power supply 41 can be turned on immediately. After the first internal power supply 41 is turned on, the first internal power supply 41 can supply power to the driver chips of the switching transistors, and the internal controller 30 can control turn-on or turn-off of the switching transistors in the AC/DC converter 10, thereby allowing the AC/DC converter 10 to work normally.

Optionally, the power supply end of the second internal power supply 42 is connected to the output end of the AC/DC converter 10.

In embodiments of the disclosure, the second internal power supply 42 can draw power from the output end of the AC/DC converter 10. The second internal power supply 42 may be a DC-to-DC power module.

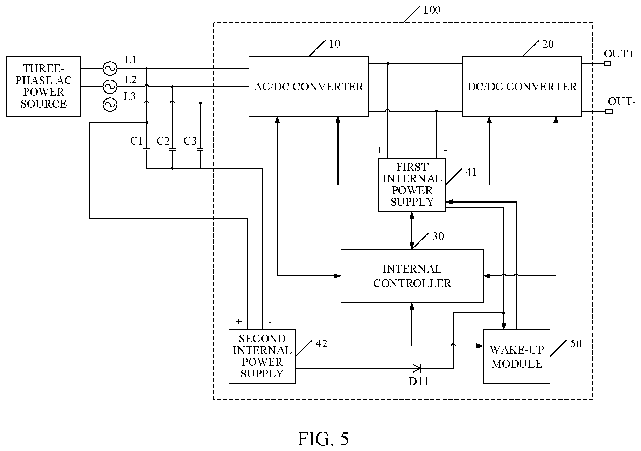

Referring to FIG. 5, FIG. 5 is another schematic structural diagram of a DC charging module provided in embodiments of the disclosure. FIG. 5 is obtained based on FIG. 3. As shown in FIG. 5, the DC charging module further includes a first diode D11, a power supply end of the wake-up module 50 is connected to an output end of the first internal power supply 41 and a cathode of the first diode D11, and an anode of the first diode D11 is connected to an output end of the second internal power supply 42.

When the first internal power supply 41 is enabled, a voltage of the output end of the first internal power supply is greater than a voltage output from the second internal power supply 42. In this case, the first diode D11 is turned off, and the wake-up module 50 is powered by the first internal power supply 41. When the first internal power supply 41 is turned off, the voltage of the output end of the first internal power supply 41 is less than the voltage output from the second internal power supply 42. In this case, the first diode D11 is turned on, and the wake-up module 50 is powered by the second internal power supply 42.

In embodiments of the disclosure, the standby power consumption of the second internal power supply 42 is very low, and the second internal power supply 42 can remain enabled continuously. By adding the first diode D11 between the output end of the first internal power supply 41 and the output end of the second internal power supply 42, switching between internal power supplies for supplying power to the wake-up module 50 can be achieved.

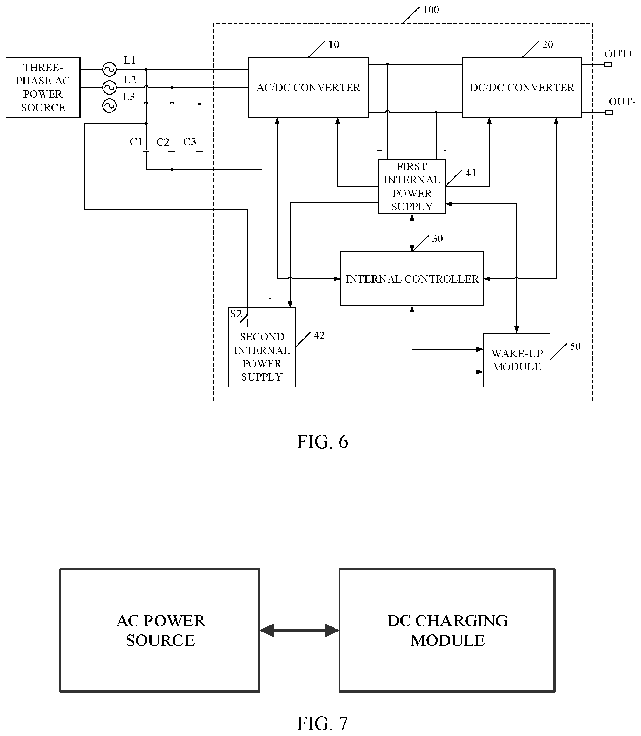

Referring to FIG. 6, FIG. 6 is another schematic structural diagram of a DC charging module provided in embodiments of the disclosure. FIG. 6 is obtained based on FIG. 3, and the internal controller 30 is further configured to: turn off the second internal power supply 42 when the first internal power supply 41 is turned on. The internal controller 30 can send the shutdown signal to the second internal power supply 42, to turn off the second internal power supply 42. The internal controller 30 can also send the enable signal to the second internal power supply 42, to turn on the second internal power supply 42.

As shown in FIG. 6, a second switch S2 may be provided in the second internal power supply 42, and the second switch S2 may be disposed between the positive electrode of the power supply end of the second internal power supply 42 and the first phase L1 of the three-phase AC power source (the second switch S2 may be disposed outside the second internal power supply 42 or inside the second internal power supply 42, and FIG. 6 illustrates the case where the second switch S2 is disposed inside the second internal power supply 42 as an example).

When the second switch S2 receives the shutdown signal, the second switch S2 is turned off, so the second internal power supply 42 is turned off. When the second switch S2 receives the enable signal, the second switch S2 is turned on, so the second internal power supply 42 is turned on.

The second switch S2 may be any one of a relay, an insulated gate bipolar transistor (IGBT), a bipolar junction transistor (BJT), and a metal-oxide-semiconductor field-effect transistor (MOSFET). When the second switch S2 is an N-type MOS transistor, the enable signal is a high-level signal, and the shutdown signal is a low-level signal.

The internal controller 30 is configured to: send the enable signal to the second internal power supply 42 to turn on the second internal power supply 42 when receiving the sleep command sent by the wake-up module 50. The internal controller 30 is further configured to: send the shutdown signal to the first internal power supply 41 to turn off the first internal power supply 41 after sending the enable signal to the second internal power supply 42.

In embodiments of the disclosure, when the internal controller 30 receives the sleep command from the wake-up module 50, the internal controller 30 first sends the enable signal to the second internal power supply 42 to turn on the second internal power supply 42, to ensure a power supply of the wake-up module 50, and then sends the shutdown signal to the first internal power supply 41 to turn off the first internal power supply 41. The standby power consumption of the DC charging module can be reduced while maintaining continuous power to the wake-up module 50.

The first internal power supply 41 is turned on after receiving the wake-up command from the wake-up module 50. When the first internal power supply 41 is turned on, the internal controller 30 turns off the second internal power supply 42, which can reduce an overall power consumption of the DC charging module.

Referring to FIG. 7, FIG. 7 is a schematic structural diagram of a DC charging pile provided in embodiments of the disclosure. As shown in FIG. 7, the DC charging pile may include a DC charging module and an AC power source.

For the DC charging module in FIG. 7, reference can be made to the above-mentioned embodiments, and details are not described herein again.

In the above-mentioned embodiments, a description of each embodiment has its own focus. For a part not described in detail in a certain embodiment, reference may be made to a relevant description of other embodiments.

In the embodiments provided by the disclosure, it should be understood that the disclosed DC charging module and DC charging pile can be implemented in other ways. For example, the above-described DC charging module embodiments are only illustrative, for example, a division of the units is only a logical function division, and there may be other division methods in an actual implementation. For example, multiple units or components can be combined or can be integrated into another system, or some features can be ignored, or not executed.

## Claims

1. A direct current (DC) charging module, comprising an alternating current (AC)/DC converter, a DC/DC converter, an internal controller, a first internal power supply, a second internal power supply, and a wake-up module; wherein an input end of the AC/DC converter is configured to be connected to an AC power source, an output end of the AC/DC converter is connected to an input end of the DC/DC converter and a power supply end of the first internal power supply;
wherein the internal controller is configured to send a shutdown signal to the first internal power supply to turn off the first internal power supply when receiving a sleep command from the wake-up module; wherein when the first internal power supply is turned off, the internal controller, the AC/DC converter, and the DC/DC converter are all in a sleep state; and
wherein the second internal power supply is configured to supply power to the wake-up module when the first internal power supply is turned off.

2. The DC charging module according to claim 1, wherein
the wake-up module is configured to send an enable signal to the first internal power supply to turn on the first internal power supply when receiving a wake-up command;
the first internal power supply is configured to supply power to the internal controller, the AC/DC converter, the DC/DC converter, and the wake-up module when the first internal power supply is turned on; and
the second internal power supply is configured to stop supplying power to the wake-up module when the first internal power supply is turned on.

3. The DC charging module according to claim 1, wherein the AC power source comprises a three-phase AC power source, and a power supply end of the second internal power supply is configured to be connected to one phase of the three-phase AC power source.

4. The DC charging module according to claim 3, wherein the DC charging module further comprises a first capacitor, a second capacitor, and a third capacitor; wherein a positive electrode of the power supply end of the second internal power supply is configured to be connected to one phase of the three-phase AC power source; wherein a first end of the first capacitor is configured to be connected to a first phase of the three-phase AC power source, a first end of the second capacitor is configured to be connected to a second phase of the three-phase AC power source, and a first end of the third capacitor is configured to be connected to a third phase of the three-phase AC power source; and wherein a second end of the first capacitor, a second end of the second capacitor, and a third end of the third capacitor are connected to a negative electrode of the power supply end of the second internal power supply.

5. The DC charging module according to claim 4, wherein a capacitance value of the first capacitor, a capacitance value of the second capacitor, and a capacitance value of the third capacitor are equal.

6. The DC charging module according to claim 1, wherein the DC charging module further comprises a first diode, a power supply end of the wake-up module is connected to an output end of the first internal power supply and a cathode of the first diode, and an anode of the first diode is connected to an output end of the second internal power supply;
wherein when the first internal power supply is enabled, a voltage of the output end of the first internal power supply is greater than a voltage output from the second internal power supply.

7. The DC charging module according to claim 1, wherein the internal controller is further configured to turn off the second internal power supply when the first internal power supply is turned on.

8. The DC charging module according to claim 7, wherein in terms of sending the shutdown signal to the first internal power supply to turn off the first internal power supply when receiving the sleep command from the wake-up module, the internal controller is configured to:
send the enable signal to the second internal power supply to turn on the second internal power supply when receiving the sleep command from the wake-up module; and
send the shutdown signal to the first internal power supply to turn off the first internal power supply after sending the enable signal to the second internal power supply.

9. The DC charging module according to any one of claims 1 to 8, wherein the wake-up module comprises a controller area network (CAN) communication controller.

10. A direct current (DC) charging pile comprising the DC charging module according to any one of claims 1 to 9 and the alternating current (AC) power source.
